# EUROPEAN PATENT APPLICATION

(11) **EP 4 517 636 A1**
(43) Date of publication of application: **05.03.2025**
(21) Application number: 23858741.4
(22) Date of filing: 23.05.2023
(51) Int. Cl.: G06Q 30/06

(54) **ORDER ASSIGNMENT METHOD AND APPARATUS, ELECTRONIC DEVICE, AND COMPUTER READABLE MEDIUM**

(30) Priority: 01.09.2022 CN 202211061742
(71) Applicant: Beijing Jingdong Qianshi Technology Co., Ltd., Beijing 100176 (CN)
(72) Inventor: WEI, Yu, Beijing 100176 (CN); ZHU, Hengbin, Beijing 100176 (CN)
(74) Representative: Mewburn Ellis LLP
(86) International application number: PCT/CN2023/095680
(87) International publication number: WO 2024/045702

(57) **Abstract**

The present disclosure relates to the technical field of warehousing, and provides an order assignment method and apparatus. One specific implementation of the method comprises: receiving an order comprising at least one commodity to be picked; for each workstation in at least one workstation, determining a warehouse exit circulating box of the workstation in warehouse exit carrying; according to articles in the warehouse exit circulating box, detecting whether a first article matched with the order is present; in response to the detection that the first article matched with the order is present, detecting whether the first article is all commodities to be picked in the order; and in response to the detection that the first article is all the commodities to be picked in the order, binding the order with the warehouse exit circulating box corresponding to the first article, and assigning the order to the workstation. The implementation improves the order assignment efficiency.

## Description

### CROSS-REFERENCE TO RELATED APPLICATIONS

The present disclosure claims priority to Chinese Patent Application No. 202211061742.6, filed on September 1, 2022, and entitled "ORDER ASSIGNMENT METHOD AND APPARATUS, ELECTRONIC DEVICE AND COMPUTER READABLE MEDIUM", which is incorporated herein by reference in its entirety.

### TECHNICAL FIELD

The present disclosure relates to the field of computer technology, in particular to the field of warehousing technology, and more particularly, to a method and apparatus for assigning an order, an electronic device, and a computer readable medium.

### BACKGROUND

An order centre receives upstream orders in real time, and an intelligent scheduling module groups orders based on order information and commodity details of the upstream orders, and composes the orders into different pooled orders according to types of the orders, overlap degree of commodities, and turnover boxes that the commodities may be positioned to.

When grouping orders, based only on the inventory of turnover boxes that may be positioned for the commodities for the orders, without taking into account actual locations of the turnover boxes, an order assigned to the same workstation may actually be positioned in turnover boxes in multiple aisles, resulting in a waste of shipping distance.

### SUMMARY

Embodiments of the present disclosure propose a method and apparatus for assigning an order, an electronic device, and a computer readable medium.

In a first aspect, an embodiment of the present disclosure provides a method for assigning an order, the method including: receiving an order including at least one to-be-picked commodity; determining, for each workstation in at least one workstation, an outbound turnover box assigned to the workstation, where the outbound turnover box is being in an outbound shipping; detecting, based on articles in the outbound turnover box, whether a first article matching the order is present in the outbound turnover box; in response to detecting that the first article matching the order is present in the outbound turnover box, detecting whether the first article is all of to-be-picked commodities in the order; and in response to detecting that the first article is all of the to-be-picked commodities in the order, binding the order to the outbound turnover box corresponding to the first article, and assigning the order to the workstation.

In some embodiments, the above method further includes: in response to detecting that the first article is part of the to-be-picked commodities in the order or in response to not detecting the first article, determining a returning turnover box assigned to the workstation, where the returning turnover box is being in a warehouse return shipping; detecting, based on articles in the returning turnover box, whether a second article matching the order is present in the returning turnover box; in response to detecting that the second article matching the order is present in the returning turnover box, detecting whether a sum of the first article and the second article is all of the to-be-picked commodities in the order; and in response to detecting that the sum of the first article and the second article is all of the to-be-picked commodities in the order, binding the order to the returning turnover box corresponding to the second article.

In some embodiments, the above method further includes: in response to detecting that the sum of the first article and the second article is part of the to-be-picked commodities in the order, selecting, based on a distance between an aisle and the at least one workstation and a task volume of the aisle, in the aisle a first in-warehouse turnover box corresponding to the order, and binding the first in-warehouse turnover box to the order.

In some embodiments, the above method further includes: in response to not detecting the first article and the second article, scoring a commodity corresponding to the order in the at least one workstation to obtain an order score corresponding to the at least one workstation; determining, based on the order score, a first workstation satisfying the order in the at least one workstation; assigning the order to the first workstation; and selecting, based on a distance between an aisle and the first workstation and a task volume of the aisle, in the aisle a second in-warehouse turnover box corresponding to the order, and binding the second in-warehouse turnover box to the order.

In some embodiments, the scoring a commodity corresponding to the order in the at least one workstation to obtain an order score corresponding to the at least one workstation, includes: scoring a number of types of same articles in the at least one workstation as the to-be-picked commodities in the order, to obtain a type score; scoring a distance of same articles in the at least one workstation as the to-be-picked commodities in the order, to obtain a distance score; and obtaining the order score based on the type score and the distance score.

In some embodiments, the scoring a number of types of same articles in the at least one workstation as the to-be-picked commodities in the order, to obtain a type score, includes: calculating a ratio of a number of types of articles, same as the to-be-picked commodities in the order, in the turnover box and the in-warehouse turnover box bound to each workstation in the at least one workstation, same as the to-be-picked commodities in the order, to the number of types of the to-be-picked commodities in the order, to obtain an order sub-score; calculating a ratio of a number of types of articles, same as the to-be-picked commodities in the order, in an aisle where the in-warehouse turnover box bound to each workstation in the at least one workstation is located to the number of types of the to-be-picked commodities in the order, to obtain an aisle sub-score; and obtaining the type score based on the order sub-score and the aisle sub-score.

In some embodiments, the assigning the order to the first workstation, includes: in response to a historical pooled order being of a same type as the order and orders in the historical pooled order not reaching a preset number of orders, adding the order to the historical pooled order; and in response to the historical pooled order not being of a same type as the order, determining a type of the order, and assigning a corresponding slot in the first workstation for the type of the order, recording a volume of the slot and an upper limit of the slot on the number of orders.

In a second aspect, an embodiment of the present disclosure provides an apparatus for assigning an order, the apparatus including: a receiving unit, configured to receive an order including at least one to-be-picked commodity; a determination unit, configured to determine, for each workstation in at least one workstation, an outbound turnover box assigned to the workstation, where the outbound turnover box is being in an outbound shipping; an article detection unit, configured to detect, based on articles in the outbound turnover box, whether a first article matching the order is present in the outbound turnover box; a commodity detection unit, configured to detect, in response to detecting that the first article matching the order is present in the outbound turnover box, whether the first article is all of to-be-picked commodities in the order; and an assignment unit, configured to bind, in response to detecting that the first article is all of the to-be-picked commodities in the order, the order to the outbound turnover box corresponding to the first article, and assign the order to the workstation.

In some embodiments, the above apparatus further includes: a warehouse return detection unit, and the warehouse return detection unit is configured to: in response to detecting that the first article is part of the to-be-picked commodities in the order or in response to not detecting the first article, determine a returning turnover box assigned to the workstation, where the returning turnover box is being in a warehouse return shipping; detect, based on articles in the returning turnover box, whether a second article matching the order is present in the returning turnover box; in response to detecting that the second article matching the order is present in the returning turnover box, detecting whether a sum of the first article and the second article is all of the to-be-picked commodities in the order; and in response to detecting that the sum of the first article and the second article is all of the to-be-picked commodities in the order, bind the order to the returning turnover box corresponding to the second article.

In some embodiments, the apparatus further include: a selection unit, configured to: in response to detecting that the sum of the first article and the second article is part of the to-be-picked commodities in the order, select, based on a distance between an aisle and the at least one workstation and a task volume of the aisle, in the aisle a first in-warehouse turnover box corresponding to the order, and bind the first in-warehouse turnover box to the order.

In some embodiments, the apparatus further includes: a scoring unit, configured to: in response to not detecting the first article and the second article, score a commodity corresponding to the order in the at least one workstation to obtain an order score corresponding to the at least one workstation; determine, based on the order score, a first workstation satisfying the order in the at least one workstation; assign the order to the first workstation; and select, based on a distance between an aisle and the first workstation and a task volume of the aisle, in the aisle a second in-warehouse turnover box corresponding to the order, and binding the second in-warehouse turnover box to the order.

In some embodiments, the above scoring unit is further configured to: score a number of types of same articles in the at least one workstation as the to-be-picked commodities in the order, to obtain a type score; score a distance of same articles in the at least one workstation as the to-be-picked commodities in the order, to obtain a distance score;; and obtain the order score based on the type score and the distance score.

In some embodiments, the above scoring unit is further configured to: calculate a ratio of a number of types of articles, same as the to-be-picked commodities in the order, in the turnover box and the in-warehouse turnover box bound to each workstation in the at least one workstation, same as the to-be-picked commodities in the order, to the number of types of the to-be-picked commodities in the order, to obtain an order sub-score; calculate a ratio of a number of types of articles, same as the to-be-picked commodities in the order, in an aisle where the in-warehouse turnover box bound to each workstation in the at least one workstation is located to the number of types of the to-be-picked commodities in the order, to obtain an aisle sub-score; and obtain the type score based on the order sub-score and the aisle sub-score.

In some embodiments, the above scoring units is further configured to: in response to a historical pooled order being of a same type as the order and orders in the historical pooled order not reaching a preset number of orders, add the order to the historical pooled order; and in response to the historical pooled order not being of a same type as the order, determine a type of the order, and assign a corresponding slot in the first workstation for the type of the order, record a volume of the slot and an upper limit of the slot on the number of orders.

According to a third aspect, an embodiment of the present disclosure provides an electronic device, the electronic device includes: one or more processors; a storage apparatus, storing one or more programs thereon; and the one or more programs, when executed by the one or more processors, cause the one or more processors to implement the method according to any one of the implementations described in the first aspect.

According to a fourth aspect, an embodiment of the present disclosure provides a computer readable medium, storing a computer program thereon, the program, when executed by a processor, implements the method according to any one of the implementations described in the first aspect.

### BRIEF DESCRIPTION OF THE DRAWINGS

Other features, objectives and advantages of the present disclosure will become more apparent from reading detailed description of non-limiting embodiments made with reference to the following accompanying drawings:
FIG. 1 is an example system architecture to which an embodiment of the present disclosure may be applied;
FIG. 2 is a flowchart of a method for assigning an order according to an embodiment of the present disclosure;
FIG. 3 is a flowchart of another embodiment of the method for assigning an order according to the present disclosure;
FIG. 4 is a schematic diagram of a distribution of an in-warehouse turnover box and a aisle of an embodiment of the present disclosure;
FIG. 5 is a schematic structural diagram of an apparatus for assigning an order according to an embodiment of the present disclosure; and
FIG. 6 is a schematic structural diagram of an electronic device suitable for implementing embodiments of the present disclosure.

### DETAILED DESCRIPTION OF EMBODIMENTS

Embodiments of the present disclosure will be further described in detail below with reference to the accompanying drawings. It may be understood that embodiments described herein are only used to explain the related disclosure, but not to limit the disclosure. In addition, it should also be noted that, for ease of description, only parts related to the relevant disclosure are shown in the accompanying drawings.

It should be noted that embodiments in the present disclosure and features in the embodiments may be combined with each other on a non-conflict basis. Embodiments of the present disclosure will be described below in detail with reference to the accompanying drawings.

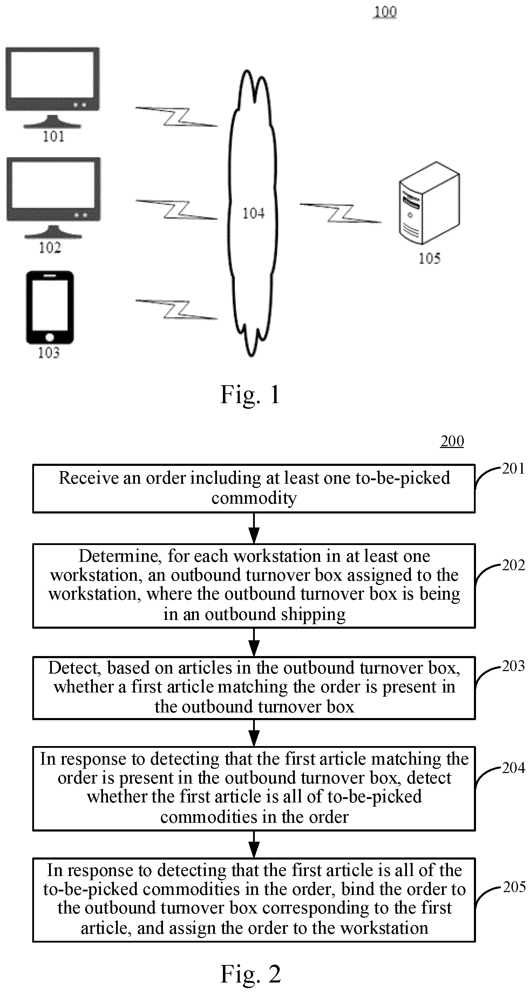

FIG. 1 illustrates an example system architecture 100 to which a method for assigning an order of the present disclosure may be applied.

As shown in FIG. 1, the system architecture 100 may include terminal device(s) 101, 102, 103, a network 104, and a server 105. The network 104 serves as a medium providing a communication link between the terminal device(s) 101, 102, 103 and the server 105. The network 104 may include various types of connections, and may typically include such as wireless communication links.

The terminal device(s) 101, 102, 103 may interact with the server 105 via the network 104 to receive or send messages, etc. The terminal device(s) 101, 102, 103 may have various communication client applications installed thereon, such as instant messaging tools, or email clients.

The terminal device(s) 101, 102, 103 may be hardware or software. When the terminal device(s) 101, 102, 103 are hardware, they may be user devices having communication and control functions, and the user devices may communicate with the server 105. When the terminal device(s) 101, 102, 103 are software, they may be installed in the user devices; the terminal device(s) 101, 102, 103 may be implemented as multiple software or software modules (e.g., software or software modules for providing distributed services), or as a single software or software module, which is not limited herein.

The server 105 may be a server that provides various services, for example, a backend server that matches workstations and turnover boxes for an order grouping system on the terminal device(s) 101, 102, 103. The backend server may perform order assignment processing based on to-be-picked commodities in/for an order, locations of turnover boxes, and aisles in which the turnover boxes are located, and feed processing results (e.g., workstations and turnover boxes obtained by matching) back to the terminal device(s).

It should be noted that the server may be hardware or software. When the server is hardware, it may be implemented as a distributed server cluster composed of a plurality of servers, or as a single server. When the server is software, it may be implemented as a plurality of software or software modules (e.g., software or software modules for providing distributed services), or as a single software or software module, which is not limited herein.

It should be noted that the method for assigning an order provided by embodiments of the present disclosure is generally performed by the server 105.

It should be understood that the number of terminal devices, networks, and servers in FIG. 1 is merely illustrative. Depending on the implementation needs, there may be any number of terminal devices, networks, and servers.

The conventional method for assigning an order is based only on the inventory of turnover boxes that may be positioned for commodities in/for orders, tries to combine the commodities of/for orders that can be positioned to the same turnover box into one task order, actual locations of the turnover boxes are not taken into account when grouping orders, and orders assigned to the same workstation may actually be positioned in multiple aisles or an order assigned to the workstation may actually be far away from the workstation, resulting in a waste of subsequent shipping distance, in addition, there may also be an increase in the number of carrying times, due to changes in inventory before positioning after order assignment.

Embodiments of the present disclosure also provide a method for assigning an order, to solve the problem of waste subsequent shipping distance of turnover boxes, as shown in FIG. 2, illustrating a flow 200 of a method for assigning an order according to an embodiment of the present disclosure, and the method for assigning an order includes the following steps.

Step 201, receiving an order including at least one to-be-picked commodity.

In the present embodiment, an order pool has a plurality of orders, each of which is assigned in real time to the executing body on which the method for assigning an order of the present disclosure operates, and the executing body combines received orders into a pooled order to be assigned to a workstation, and during assigning an order, the executing body may first determine the workstation to which the order belongs, as well as an aisle of the warehouse in which the to-be-picked commodity in/for the order is located, and a turnover box in the aisle.

In the present embodiment, the turnover box is a device for storing commodity, and may be carried by a robot, which carries the turnover box from a storage location to the picking workstation during carrying, then the commodity is delivered out of the warehouse by means of manual picking or machine picking. It should be noted that a turnover box located on a storage location in the warehouse is an in-warehouse turnover box.

In the present embodiment, the order includes at least one to-be-picked commodity, the warehouse has a plurality of aisles, each aisle has a plurality of storage locations arranged on both sides thereof, each storage location may be placed with at least one turnover box, and there is/are article(s) stored in the turnover box. All of to-be-picked commodities in the order may be articles stored in turnover boxes in different aisles of the warehouse, or may be articles stored in turnover boxes in the same aisle of the warehouse. When all of the to-be-picked commodities in the order can be matched with turnover boxes in one same aisle, and the aisle is the nearest to the workstation to which the order is assigned, it may be determined that the turnover boxes corresponding to the order, as well as the workstation, are optimal.

Step 202, determining, for each workstation in at least one workstation, an outbound turnover box assigned to the workstation, where the outbound turnover box is being in an outbound shipping.

In the present embodiment, the outbound turnover box is a turnover box that is on its way exiting the warehouse and is travelling towards the direction of the workstation assigned thereto, and the outbound turnover box may be on its way to the workstation assigned thereto or may have already arrived at the assigned workstation.

In the present embodiment, the workstation is a work area for performing warehouse outbound picking and is divided into manual picking workstation and special workstation. The at least one workstation fixedly corresponds to different aisles of the warehouse, and a distance from each workstation in the at least one workstation to each aisle is a fixed value, so that each workstation has a fixed distance value to each aisle, and the distance value is a length of an actual shortest route from a aisle to a workstation, e.g., if the distance value from a first aisle to a first workstation is C, then C is the length of the shortest route from the first aisle to the first workstation.

In the present embodiment, the at least one workstation is also a workstation with an empty slot, or a workstation in which order grouping of a pooled order corresponding to a slot is not completed.

In the present embodiment, as the orders in the order pool are continuously assigned to different workstations, corresponding outbound turnover boxes corresponding to different workstations are carried by robots (e.g., Flying Wolves) on transport routes to the different workstations, or directly carried by the robots to the different workstations.

Step 203, detecting, based on articles in the outbound turnover box, whether a first article matching the order is present in the outbound turnover box.

In the present embodiment, the three, i.e., the workstation, the outbound turnover box and a historical order, has a corresponding relationship. When an article in the outbound turnover box corresponding to a historical order is transported to the workstation, in the outbound turnover box there may be article(s) corresponding to another order. To this end, by detecting other article(s) in the outbound turnover box which are not corresponding to the order, the articles in the outbound turnover box can be fully utilized; it should be noted that when an article in the turnover box is bound to an order, the article will not be bound to another order.

In the present embodiment, the current article(s) in the outbound turnover box is/are article(s) other than those already bound to workstation(s) or order(s), and since an article cannot be bound to another order after it has been bound to a workstation or order, to this end, the article(s) in the outbound turnover box, article(s) in the in-warehouse turnover box, and article(s) in a returning turnover box described in the present embodiment are articles that have not been bound to orders or workstations.

In the present embodiment, the first article is at least one article in the outbound turnover box, and the first article is also an article that matches the order. Here, the first article may be all of the to-be-picked commodities in the order, the first article may also be part of the to-be-picked commodities in the order.

Step 204, in response to detecting that the first article matching the order is present in the outbound turnover box, detecting whether the first article is all of to-be-picked commodities in the order.

In the present embodiment, articles in the first article matching the order may be articles same as to-be-picked commodities in/for the order. The executing body, after obtaining the information about the to-be-picked commodities and the articles in the outbound turnover box, may compare the two, and when they are the same, determine that the articles match the order, and after matching all of the articles in the turnover box with the to-be-picked commodities in the order, determine whether the first article including at least one article obtained by the matching is the same as or similar to all of the to-be-picked commodities in the order, and if they are the same, it may be determined that the first article is all of the to-be-picked commodities in the order.

Step 205, in response to detecting that the first article is all of the to-be-picked commodities in the order, binding the order to the outbound turnover box corresponding to the first article, and assigning the order to the workstation.

In the present embodiment, when articles in the outbound turnover box can fulfill requirements of all of the to-be-picked commodities in the order, the workstation corresponding to the outbound turnover box may be directly used as the workstation to which the order is to be bound, and so that the order is bound to that workstation, accordingly the need of the order for order grouping may be completed. It should be noted that after binding the order to the outbound turnover box, accordingly, the first article is also bound to the order, and at the workstation, an operator can pick the first article that satisfies the order only by means of this binding relationship.

In the present embodiment, binding the order to the outbound turnover box corresponding to the first article, and assigning the order to the workstation, may generate a carrying task for controlling the robot to carry the outbound turnover box, so that warehouse outbound picking can be completed at this workstation.

The present embodiment provides the method for assigning an order that, first, receiving an order including at least one to-be-picked commodity; secondly, determining, for each workstation in at least one workstation, an outbound turnover box assigned to the workstation, where the outbound turnover box is being in an outbound shipping; next, detecting, based on articles in the outbound turnover box, whether a first article matching the order is present in the outbound turnover box; then, in response to detecting that the first article matching the order is present in the outbound turnover box, detecting whether the first article is all of to-be-picked commodities in the order; and finally, in response to detecting that the first article is all of the to-be-picked commodities in the order, binding the order to the outbound turnover box corresponding to the first article, and assigning the order to the workstation. Thus, when the outbound turnover box assigned to the workstation, which is being in in an outbound shipping, meets the requirements of all of the to-be-picked commodities in the order, it is preferred that the outbound turnover box is bound to the order and that the workstation corresponding to the outbound turnover box is used as the workstation corresponding to the order. With full consideration given to an actual location of the turnover box, the method achieves simultaneous positioning and order grouping, saves a shipping distance of the to-be-picked commodities in the order, and improves an efficiency of order assignment.

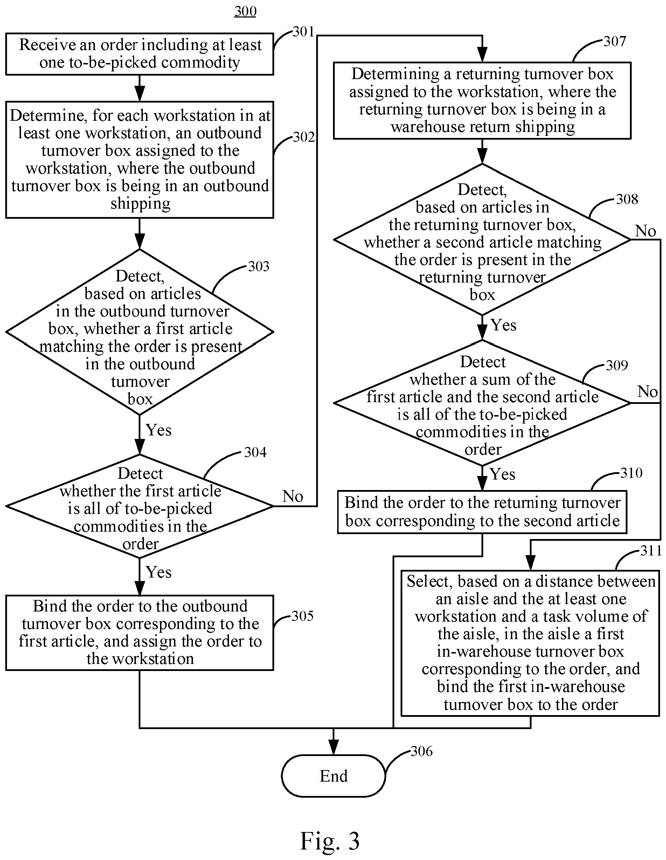

In another embodiment of the method for assigning an order of the present disclosure, upon detecting that an inventory in the outbound turnover box of the workstation does not fulfill all of the to-be-picked commodities in the order, it may also be considered whether an inventory in a returning turnover box of the workstation satisfies the to-be-picked commodities in the order, as in FIG. 3, illustrating a flow 300 of the method for assigning an order according to another embodiment of the present disclosure, and the method for assigning an order includes the following steps.

Step 301, receiving an order including at least one to-be-picked commodity.

In the present embodiment, an order pool has a plurality of orders, and a received order is an order that an executing body, on which the method for assigning an order operates, currently needs to process.

Step 302, determining, for each workstation in at least one workstation, an outbound turnover box assigned to the workstation, where the outbound turnover box is being in an outbound shipping.

Step 303, detecting, based on articles in the outbound turnover box, whether a first article matching the order is present in the outbound turnover box; if the first article matching the order is detected, performing step 304.

Step 304, detecting whether the first article is all of to-be-picked commodities in the order; if the first article is all of the to-be-picked commodities in the order, performing step 305; if the first article is part of the to-be-picked commodities in the order, performing

### step 307.

Step 305, binding the order to the outbound turnover box corresponding to the first article, and assigning the order to the workstation, performing step 306.

It should be understood that the operations and features in steps 301-305 above correspond to the operations and features in steps 101-105, respectively, and therefore, the above description of the operations and features in steps 101-105 is equally applicable to steps 301-305, detailed description thereof will be omitted.

Step 306, ending.

Step 307, determining a returning turnover box assigned to the workstation, where the returning turnover box is being in a warehouse return shipping.

In the present embodiment, the returning turnover box is a turnover box that is returning to the warehouse and is travelling in a direction away from the assigned workstation. The returning turnover box may be just coming out of the assigned workstation, or may be about to arrive at a warehouse storage location. When the returning turnover box enters the warehouse storage location, the returning turnover box becomes an in-warehouse turnover box.

Step 308, detecting, based on articles in the returning turnover box, whether a second article matching the order is present in the returning turnover box; if the second article matching the order is detected, performing step 309; if the second article matching the order is not detected, performing step 311.

In the present embodiment, the second article is at least one article in the returning turnover box, and the second article is also an article that matches with the order. Here, the second article may be all of the to-be-picked commodities in/for the order after the first article is removed from the order, or the second article may be part of the to-be-picked commodities in/for the order after the first article is removed from the order.

Step 309, detecting whether a sum of the first article and the second article is all of the to-be-picked commodities in the order; if the sum of the first article and the second article is all of the to-be-picked commodities in the order, performing step 310; if the sum of the first article and the second article is not all of the to-be-picked commodities in the order, performing step 311.

In the present embodiment, articles in the second article matching the order may be articles same as the to-be-picked commodities in the order, or may be commodities similar to the to-be-picked commodities in the order. The executing body, after obtaining information about the to-be-picked commodities and the articles in the returning turnover box, may compare a similarity of the two, if the similarity of the two reaches a similarity threshold (e.g., 90%) or more, determine that the articles match the order, and after matching all of the articles in the turnover box with the to-be-picked commodities in the order, determine whether the second article including at least one article obtained by the matching is the same as or similar to all of the to-be-picked commodities (except for the first article) in the order, and if they are the same, it may be determined that the sum of the first article and the second article is all of the to-be-picked commodities in the order.

Step 310, binding the order to the returning turnover box corresponding to the second article, performing step 306.

In the present embodiment, when articles in the outbound turnover box and the returning turnover box can fulfill requirements of all of the to-be-picked commodities in the order, the second article in the returning turnover box may be bound to the order, which may complete the need of the order for order grouping.

Step 311, selecting, based on a distance between an aisle and the at least one workstation and a task volume of the aisle, in the aisle a first in-warehouse turnover box corresponding to the order, and binding the first in-warehouse turnover box to the order, performing step 306.

In the present embodiment, in the event that the articles in the outbound turnover box and the returning turnover box cannot fulfill the requirements of all of the to-be-picked commodities in the order, it may select the turnover box and articles in the selected turnover box from the storage locations in the warehouse and bind the order to the selected turnover box and the articles in the selected turnover box.

In the present embodiment, the first in-warehouse turnover box is a turnover box matching the to-be-picked commodities in the order, and the articles in the first in-warehouse turnover box may fulfill to-be-picked commodities (except for the first article and the second article) in all of the to-be-picked commodities. In order to improve the efficiency of order assignment, based on the distance between the aisles and the at least one workstation in the warehouse, a distance between each aisle and the order-bound workstation in the warehouse may be determined, thereby providing a reliable basis for selecting the aisle that is nearest to the order-bound workstation; and based on the task volume of the aisle that is nearest to the order-bound workstation, an aisle having the least task volume may be selected, and an in-warehouse turnover box matching the to-be-picked commodities in the aisle having the least task volume may be used as the first in-warehouse turnover box.

In the present embodiment, when binding the first in-warehouse turnover box to the order, articles in the first in-warehouse turnover box that are same as the to-be-picked commodities are bound to the order.

In the method for assigning an order provided by the present embodiment, when the first article is part of the to-be-picked commodities in the order, detecting second article in the returning turnover box assigned to the workstation and determining whether the sum of the first article and the second article is all of the to-be-picked commodities in the order, when the sum of the first article and the second article is all of the to-be-picked commodities in the order, binding the order to the returning turnover box of the second article, thereby ensuring validity of the order assignment; when the sum of the first article and the second article is part of the to-be-picked commodities in the order, based on the distance between the aisles and the at least one workstation and the task volume of the aisles, selecting the first in-warehouse turnover box, and binding the first in-warehouse turnover box to the order, thereby completing the binding between all of the to-be-picked commodities in the order and the turnover box(s), and improving the reliability of order assignment.

Alternatively, in another embodiment of the present disclosure, the method for assigning an order may further include: in response to not detecting the first article matching the order, determining, for each workstation in the at least one workstation, a returning turnover box assigned to the workstation, the returning turnover box is being in a warehouse return shipping; detecting whether a second article matching the order is present in the returning turnover box, based on articles in the returning turnover box; in response to detecting that the second article matching the order is present in the returning turnover box, binding the order to the returning turnover box corresponding to the second article, and assigning the order to the workstation.

In some alternative implementations of the present embodiment, the method for assigning an order further includes: in response to not detecting the first article, determining a returning turnover box of the workstation, the returning turnover box is being in a warehouse return shipping; detecting, based on articles in the returning turnover box, whether a second article matching the order is present in the returning turnover box; in response to detecting that the second article matching the order is present in the returning turnover box, detecting whether a sum of the first article and the second article is all of the to-be-picked commodities in the order (i.e., whether the second article is all of the to-be-picked commodities in the order); and in response to detecting that the sum of the first article and the second article is all of the to-be-picked commodities in the order (i.e., in response to detecting that the second article is all of the to-be-picked commodities in the order), binding the order to the returning turnover box corresponding to the second article.

In the present embodiment, when the first article is not detected, the first article is zero, and the sum of the first article and the second article is the second article, and if it is detected that the second article is all of the to-be-picked commodities in the order, the order is bound to the returning turnover box corresponding to the second article.

In the method for assigning an order provided by the present embodiment, in response to not detecting the first article, however, the second article in the returning turnover box is all of the to-be-picked commodities in the order, then the order is bound to the returning turnover box, thereby completing the binding between all of the to-be-picked commodities in the order and the turnover box, and improving the reliability of order assignment.

In the present embodiment, the outbound turnover box and the returning turnover box both correspond to the workstation, and when the first article and the second article matching the to-be-picked commodities in the order are not detected, all the workstation(s) corresponding to the order may be scored to determine a workstation best suited to the order, and the order may be assigned to this most suitable workstation, thereby completing the job of order assignment.

In some embodiments of the present disclosure, the method for assigning an order further includes: in response to not detecting the first article and the second article, scoring a commodity corresponding to the order in the at least one workstation to obtain an order score corresponding to the at least one workstation; determining, based on the order score, a first workstation in the at least one workstation satisfying the order; assigning the order to the first workstation; and selecting in the aisle a second in-warehouse turnover box corresponding to the order, based on a distance between the aisle and the first workstation and the task volume of the aisle, and binding the second in-warehouse turnover box to the order.

In the present embodiment, the scoring a commodity corresponding to the order in the at least one workstation to obtain an order score corresponding to the at least one workstation, includes: scoring commodities, that have been assigned to the at least one workstation and are the same or similar to the to-be-picked commodities in the order, to obtain an order score for each workstation in the at least one workstation.

In the present embodiment, a commodity corresponding to a workstation refers to a commodity that has been assigned to the workstation, and the assigned article is also the article in the order bound to the workstation.

In the present embodiment, a distance value between the current order and each workstation in the at least one workstation, and a correlation between the commodities corresponding to each workstation and the to-be-picked commodities in the current order, may be determined by scoring a distance and a type of the commodities corresponding to the at least one workstation, and the first workstation determined by the distance value and the correlation is the workstation that satisfies the order.

In the present embodiment, the determining, based on the order score, a first workstation in the at least one workstation that satisfies the order includes: if the order score of each workstation is greater than zero, a workstation having the highest order score is selected as the first workstation; if there are multiple workstations having the same order score in the at least one workstation (one order for multiple workstations, or multiple orders for one workstation), the first workstation may be selected according to order cutoff times from the earliest to the latest, or the numbers of pieces of orders of the multiple workstations in descending order.

Alternatively, when the order score of each workstation in the at least one workstation is all 0, searching for a new seed aisle, finding an aisle having the largest distance value in previous aisle workstation distance values and having no article has been assigned thereto.

In the present embodiment, after determining the first workstation, the order is bound to the first workstation, an aisle having the shortest distance is determined based on a distance between each aisle in the warehouse and the first workstation, and the turnover box in the aisle having the least task volume and having the shortest distance is used as the second in-warehouse turnover box satisfying the order.

In the method for assigning an order provided by the present embodiment, in response to not detecting the first article and the second article matching the order, determining the first workstation satisfying the order based on the order score, and assigning the order to the first workstation; selecting the second in-warehouse turnover box corresponding to the aisle based on the distance between the aisle and the first workstation and the task volume of the aisle, and binding the order to the second turnover box, so that each order may be assigned to the nearest workstation and turnover box, further reducing the shipping distance of the to-be-picked commodities.

Alternatively, the method for assigning an order further includes: in response to not detecting the first article and the second article, selecting, based on the order, a first aisle that has a smallest distance to the to-be-picked commodities in the order, performing distance cost calculation between the first aisle and each workstation in the at least one workstation, to obtain a second workstation having the lowest distance cost; assigning the order to the second workstation; and selecting in the aisle a third in-warehouse turnover box corresponding to the order, based on a distance between the aisle and the second workstation and the task volume of the aisle, and binding the third in-warehouse turnover box to the order.

In some alternative embodiments of the present disclosure, the scoring a commodity, which corresponds to the order, in the at least one workstation to obtain an order score corresponding to the at least one workstation, includes: scoring the number of types of articles in the at least one workstation, which are same as the to-be-picked commodities in the order, to obtain a type score; scoring a distance of articles in the at least one workstation, which are same as the to-be-picked commodities in the order, to obtain a distance score; and obtaining the order score based on the type score and the distance score.

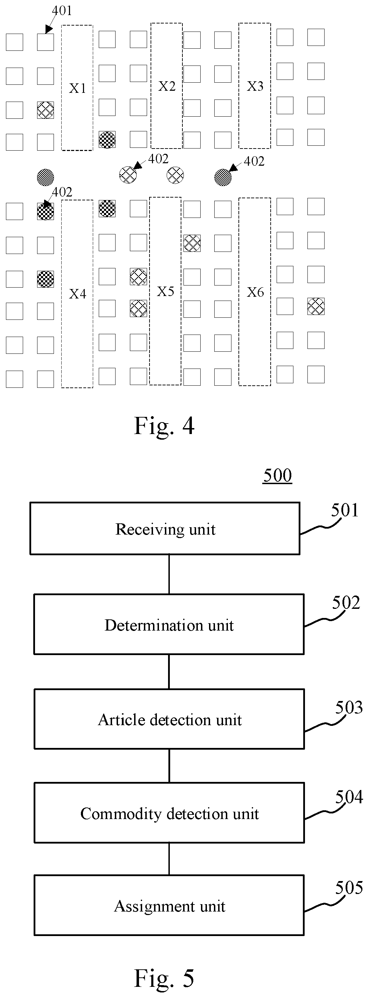

As shown in FIG. 4, a plurality of turnover boxes 402 are distributed on storage locations 401 corresponding to different aisles X1-X6 in a warehouse, where each turnover box 402 corresponds to a workstation (assigned workstation), and different patterns labelled on the turnover boxes 402 represent workstations for different purposes.

The scoring the number of types of same articles in the at least one workstation, which are same as the to-be-picked commodities in the order, to obtain a type score includes: determining the number of types of articles that have been assigned to each workstation in the at least one workstation, and obtaining a ratio of the number of types of the articles that have been assigned to each workstation to the number of types of the to-be-picked commodities in the order to obtain a type score, where, for the j^{th} (j≥1) workstation, the type score may be: a ratio of the number of types of articles, which are same as the order, in a set Ω of the j^{th} workstation, to the number of types of the to-be-picked commodities in the order. Here, the set Ω is articles on a outbound turnover box of the j^{th} workstation in warehouse outbound shipping and on an in-warehouse turnover box at the workstation that have been assigned but to be shipped.

As shown in FIG. 4, a distance value Cij from each aisle Xi (X1-X6 in FIG. 4) to the workstation (not shown in the figure) is initialised, where i represents the i^{th} (i≥1) aisle, and j represents the j^{th} workstation. Then the scoring a distance of articles in the at least one workstation, which are same as the to-be-picked commodities in the order, is: for each workstation in the at least one workstation, selecting articles assigned to the workstation that are the same or similar to to-be-picked commodities in the order, determining article aisles in which the assigned articles are located, and summing all distance values associated with the article aisles to obtain a distance score for each workstation. For the j^{th} workstation, the specific distance score is: the sum of the distance values to the j^{th} workstation from the aisles in which all articles are same as the commodities in the order, and that aisle numbers of the aisles, in which all articles are same as the commodities in the order, belong to the set of aisle numbers of the turnover boxes of the j^{th} workstation that have been positioned but to be shipped.

In this alternative implementation, obtaining the order score based on the type score and the distance score includes: adding the type score to the distance score to obtain the order score.

Alternatively, obtaining the order score based on the type score and the distance score may further include: determining a weight of the type score and a weight of the distance score, and adding the type score multiplied by the weight of the type score to the distance score multiplied by the weight of the distance score, to obtain the order score.

The method for obtaining the order score provided by this alternative implementation, first scoring the type of the to-be-picked commodities in the order and the articles of each workstation in the at least one workstation, and determining the type score of the to-be-picked commodities in the order corresponding to the number of types of the articles of each workstation; secondly, scoring the distance of the to-be-picked commodities in the order and the articles of each workstation in the at least one workstation, and determining the score of the distance between the to-be-picked commodities in the order to each workstation; thus, the type situation and the distance situation of the commodities are taken into fully consideration, providing a reliable basis for reasonably assigning workstations.

In some alternative implementations of the present embodiment, the scoring the number of types of articles in the at least one workstation, which are same as the to-be-picked commodities in the order, to obtain a type score includes: obtaining a ratio of, the number of types of articles, which are same as the to-be-picked commodities in the order, in the outbound turnover box and the bound in-warehouse turnover box of each workstation in the at least one workstation to the number of types of the to-be-picked commodities in the order, to obtain an order sub-score; obtaining a ratio of, the number of types of articles, which are same as the to-be-picked commodities in the order, in the aisle (where the in-warehouse turnover box bound to each workstation in the at least one workstation is located) to the number of types of the to-be-picked commodities in the order, to obtain an aisle sub-score; and obtaining the type score based on the order sub-score and the aisle sub-score.

In this alternative implementation, obtaining the type score based on the order sub-score and the aisle sub-score, includes: adding the order sub-score to the aisle sub-score to obtain the type score.

Alternatively, the obtaining the type score based on the order sub-score and the aisle sub-score, includes: determining a first weight of the order sub-score, determining a second weight of the aisle sub-score, and adding the first weight multiplied by the order sub-score to the second weight multiplied by the aisle sub-score to obtain the type score.

In the present embodiment, for the j^{th} workstation, the type sub-score r₁ may be obtained using the method for obtaining the type score in the above embodiment. The aisle sub-score may be: a ratio of the number of types of same articles as the order in the set θ of the j^{th} workstation to the number of types of the to-be-picked commodities in the order, where the set θ is commodities in stock in the aisle(s) of the j^{th} workstation.

The method for obtaining the order score provided by this alternative implementation, first determining the ratio of the number of types of the same articles in the outbound turnover box and the bound in-warehouse turnover box of each workstation to the number of types of the to-be-picked commodities in the order; secondly, obtaining the ratio of the number of types of the same articles in the aisle, where the in-warehouse turnover box bounded to each workstation is located, to the number of types of the to-be-picked commodities in the order, and obtaining the type score based on the ratio of the two numbers of types; thus, the distance between the warehouse outbound and bound articles and the aisle are taken into fully consideration in the calculation of the type score, providing a reliable basis for reasonably assigning workstations.

Alternatively, the scoring the number of types of same articles in the at least one workstation as the to-be-picked commodities in the order to obtain a type score includes: obtaining a ratio of the number of types of articles, that are same as to-be-picked commodities in the order, in the outbound turnover box, the returning turnover box, and the bound in-warehouse turnover box of each workstation in the at least one workstation to the number of types of the to-be-picked commodities in the order, to obtain a first sub-score; obtaining a ratio of the number of types of articles, that are same as to-be-picked commodities in the order, in the aisle where the in-warehouse turnover box bound to each workstation is located in the at least one workstation to the number of types of the to-be-picked commodities in the order, to obtain a second sub-score; and obtaining the type score based on the first sub-score and the second sub-score.

In the present embodiment, obtaining the type score based on the first sub-score and the second sub-score, includes: adding the first sub-score to the second sub-score to obtain the type score.

Alternatively, the obtaining the type score based on the first sub-score and the second sub-score, includes: determining a weight of a turnover box and a weight of the aisle, and adding the weight of the turnover box multiplied by the first sub-score to the weight of the aisle multiplied by the second sub-score, to obtain the type score.

In some alternative implementations of the present embodiment, the assigning the order to the first workstation includes: in response to a historical pooled order being of a same type as the order and orders in the historical pooled order not reaching a preset number of orders, adding the order to the historical pooled order; or in response to the historical pooled order not being of a same type as the order, determining a type of the order, and assigning a corresponding slot in the first workstation for the type of the order, recording a volume of the slot and its upper limit on the number of orders.

In the present embodiment, after assigning the order to the first workstation, it may be determined that order grouping is completed, the slot in the first workstation is occupied, the bound turnover box is locked, the inventory is pre-occupied, a picking task is sent to the workstation, and then a list of to-be-carried tasks is generated.

After the workstation receives successfully, an intelligent scheduling module dispatches a vehicle to the workstation based on the to-be-shipped tasks that have been positioned. Vehicle dispatch is a continuous polling process, when the workstation has free cache space and the robot is free, turnover boxes are matched by aisle dimension to generate shipping tasks to be sent to the robot.

In the present embodiment, at the current moment, when historical pooled orders of the first workstation has a historical pooled order which has incomplete order grouping (the orders in the historical pooled order have not reached the preset number of orders) and is of the same type as the current order, the current order is directly added to the historical pooled order, which completes the order grouping of the pooled order of the first workstation and makes the order grouping more real-time and more effective; when the historical pooled orders of the first workstation is not of the same type as the order, the current order becomes a pooled order independently, and the current order is assigned to the corresponding slot in the first workstation, so that the to-be-picked commodities in the order may be picked as soon as possible and delivered out of the warehouse.

Referring further to FIG. 5, as an implementation of the method shown in the above figures, an embodiment of the present disclosure provides an apparatus for assigning an order, the apparatus embodiment corresponds to the method embodiment shown in FIG. 2, and the apparatus may be applied in various electronic devices.

As shown in FIG. 5, an embodiment of the present disclosure provides an apparatus 500 for assigning an order, the apparatus 500 including: a receiving unit 501, a determination unit 502, an article detection unit 503, a article detection unit 504, and an assignment unit 505. The receiving unit 501 may be configured to receive an order including at least one to-be-picked commodity. The determination unit 502 may be configured to determine, for each workstation in at least one workstation, an outbound turnover box assigned to the workstation, where the outbound turnover box is being in an outbound shipping. The article detection unit 503 may be configured to detect, based on articles in the outbound turnover box, whether a first article matching the order is present. The article detection unit 504 may be configured to detect, based on articles in the outbound turnover box, whether a first article matching the order is present in the outbound turnover box. The assignment unit 505 may be configured to bind, in response to detecting that the first article is all of the to-be-picked commodities in the order, the order to the outbound turnover box corresponding to the first article, and assign the order to the workstation.

In the present embodiment, in the apparatus 500 for assigning an order, for the specific processing and technical effects of the receiving unit 501, the determination unit 502, the article detection unit 503, the article detection unit 504, and the assignment unit 505, reference may be made to steps 201, 202, 203, 204, and 205 in the corresponding embodiment of FIG. 2, respectively.

In some embodiments, the apparatus 500 for assigning an order further includes: a warehouse return detection unit (not shown in the figure), and the warehouse return detection unit may be configured to: in response to detecting that the first article is part of the to-be-picked commodities in the order or in response to not detecting the first article, determine a returning turnover box assigned to the workstation, where the returning turnover box is being in a warehouse return shipping; detect, based on articles in the returning turnover box, whether a second article matching the order is present in the returning turnover box; in response to detecting that the second article matching the order is present in the returning turnover box, detecting whether a sum of the first article and the second article is all of the to-be-picked commodities in the order;; and in response to detecting that the sum of the first article and the second article is all of the to-be-picked commodities in the order, bind the order to the returning turnover box corresponding to the second article.

In some embodiments, the apparatus 500 for assigning an order further includes: a selection unit (not shown in the figure), and the selection unit may be configured to: in response to detecting that the sum of the first article and the second article is part of the to-be-picked commodities in the order, select, based on a distance between an aisle and the at least one workstation and a task volume of the aisle, in the aisle a first in-warehouse turnover box corresponding to the order, and bind the first in-warehouse turnover box to the order.

In some embodiments, the apparatus 500 for assigning an order further includes: a scoring unit (not shown in the figure), and the scoring unit may be configured to: in response to not detecting the first article and the second article, score a commodity corresponding to the order in the at least one workstation to obtain an order score corresponding to the at least one workstation; determine, based on the order score, a first workstation satisfying the order in the at least one workstation; assign the order to the first workstation; and select, based on a distance between an aisle and the first workstation and a task volume of the aisle, in the aisle a second in-warehouse turnover box corresponding to the order, and binding the second in-warehouse turnover box to the order.

In some embodiments, the scoring unit is further configured to: score a number of types of same articles in the at least one workstation as the to-be-picked commodities in the order, to obtain a type score; score a distance of same articles in the at least one workstation as the to-be-picked commodities in the order, to obtain a distance score;; and obtain the order score based on the type score and the distance score.

In some embodiments, the scoring unit is further configured to: calculate a ratio of a number of types of articles, same as the to-be-picked commodities in the order, in the turnover box and the in-warehouse turnover box bound to each workstation in the at least one workstation, same as the to-be-picked commodities in the order, to the number of types of the to-be-picked commodities in the order, to obtain an order sub-score; calculate a ratio of a number of types of articles, same as the to-be-picked commodities in the order, in an aisle where the in-warehouse turnover box bound to each workstation in the at least one workstation is located to the number of types of the to-be-picked commodities in the order, to obtain an aisle sub-score; and obtain the type score based on the order sub-score and the aisle sub-score.

In some embodiments, the scoring unit is further configured to: in response to a historical pooled order being of a same type as the order and orders in the historical pooled order not reaching a preset number of orders, add the order to the historical pooled order; and in response to the historical pooled order not being of a same type as the order, determine a type of the order, and assign a corresponding slot in the first workstation for the type of the order, record a volume of the slot and an upper limit of the slot on the number of orders.

The present embodiment of the present disclosure provides the apparatus for assigning an order that, first, receives an order including at least one to-be-picked commodity; secondly, determines, for each workstation in at least one workstation, a outbound turnover box assigned to the workstation in which is being in an outbound shipping; next, detects, based on articles in the outbound turnover box, whether a first article matching the order is present in the outbound turnover box; then, detects, in response to detecting that the first article matching the order is present in the outbound turnover box, whether the first article is all of to-be-picked commodities in the order; and finally, binds, in response to detecting that the first article is all of the to-be-picked commodities in the order, the order to the outbound turnover box corresponding to the first article, and assigns the order to the workstation. Thus, when the outbound turnover box of the workstation in an outbound shipping meets the requirements of all of the to-be-picked commodities in the order, it is preferred that the outbound turnover box is bound to the order and that the workstation corresponding to the outbound turnover box is used as the workstation corresponding to the order, with full consideration given to an actual location of the turnover box, the apparatus achieves simultaneous positioning and order grouping, saves a shipping distance of the to-be-picked commodities in the order, and improves an efficiency of order assignment.

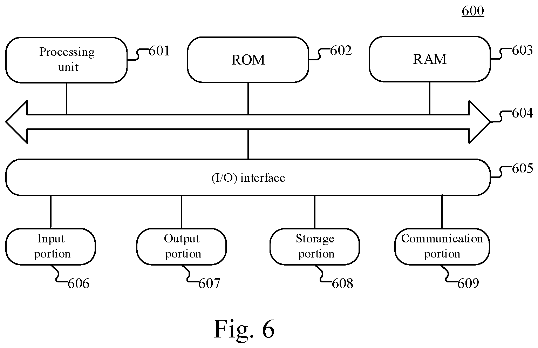

Referring to Fig. 6, a schematic structural diagram of a electronic device 600 adapted to implement a terminal device or a server of the embodiments of the present disclosure is shown.

As shown in Fig. 6, the electronic device 600 includes a processing unit (e.g., a central processing unit (CPU), graphics processing unit (GPU)) 601, which may execute various appropriate actions and processes in accordance with a program stored in a readonly memory (ROM) 602 or a program loaded into a random access memory (RAM) 603 from a storage portion 608. The RAM 603 also stores various programs and data required by operations of the electronic device 600. The processing unit 601, the ROM 602 and the RAM 603 are connected to each other through a bus 604. An input/output (I/O) interface 605 is also connected to the bus 604.

The following components are connected to the I/O interface 605: an input portion 606 including a touch screen, a touchpad, a keyboard, a mouse etc.; an output portion 607 comprising a liquid crystal display device (LCD), a speaker, a vibrator, etc.; a storage portion 608 including a magnetic tape, a hard disk and the like; and a communication portion 609. The communication portion 609 may allow the electronic device 600 to communicate wirelessly or wired with other devices to exchange data. Although Fig. 6 shows an electronic device 600 with various units, it should be understood that it is not required to implement or have all of the units shown. The electronic device 600 be implemented alternatively or have more or fewer units. Each box shown in Fig. 6 can represent one unit or multiple units as needed.

In particular, according to embodiments of the present disclosure, the process described above with reference to the flow chart may be implemented in a computer software program. For example, an embodiment of the present disclosure includes a computer program product, which comprises a computer program that is hosted in a machine-readable medium. The computer program comprises program codes for executing the method as illustrated in the flow chart. In such an embodiment, the computer program may be downloaded and installed from a network via the communication portion 609, or may be installed from the storgae portion 608, or may be installed from the ROM 602. The computer program, when executed by the central processing unit (CPU) 601, implements the above mentioned functionalities as defined by the methods of the present disclosure.

It should be noted that the computer readable medium in the present disclosure may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fibre, a portable compact disk read only memory (CD-ROM), an optical memory, a magnet memory or any suitable combination of the above. In some embodiments of the present disclosure, the computer readable storage medium may be any physical/tangible medium containing or storing programs which can be used by a command execution system, apparatus or element or incorporated thereto. In some embodiments of the present disclosure, the computer readable signal medium may include data signal in the base band or propagating as parts of a carrier, in which computer readable program codes are carried. The propagating signal may take various forms, including but not limited to: an electromagnetic signal, an optical signal or any suitable combination of the above. The signal medium that can be read by computer may be any computer readable medium except for the computer readable storage medium. The computer readable medium is capable of transmitting, propagating or transferring programs for use by, or used in combination with, a command execution system, apparatus or element. The program codes contained on the computer readable medium may be transmitted with any suitable medium including but not limited to: wireless, wired, optical cable, RF medium etc., or any suitable combination of the above.

The computer readable medium may be included in the server, or a stand-alone computer readable medium not assembled into the server. The computer readable medium carries one or more programs, the one or more programs, when executed by the server, cause the server to: receive an order including at least one to-be-picked commodity; determine, for each workstation in at least one workstation, a outbound turnover box assigned to the workstation, where the outbound turnover box is being in an outbound shipping; detect, based on articles in the outbound turnover box, whether a first article matching the order is present in the outbound turnover box; in response to detecting that the first article matching the order is present in the outbound turnover box, detect whether the first article is all of to-be-picked commodities in the order; and in response to detecting that the first article is all of the to-be-picked commodities in the order, bind the order to the outbound turnover box corresponding to the first article, and assigning the order to the workstation.

A computer program code for executing operations in some embodiments of the present disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In the circumstance involving a remote computer, the remote computer may be connected to a user's computer through any network, including local area network (LAN) or wide area network (WAN), or may be connected to an external computer (for example, connected through Internet using an Internet service provider).

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion comprising one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system executing specified functions or operations, or by a combination of a dedicated hardware and computer instructions.

The units involved in embodiments of the present disclosure may be implemented by means of software or hardware. The described unit may also be provided in a processor, for example, it may be described as: a processor including a receiving unit, a determination unit, an article detection unit, a article detection unit, and an assignment unit. Here, the names of these units do not in some cases constitute a limitation to such units themselves. For example, the receiving unit may alternatively be described as "a unit configured to receive an order including at least one to-be-picked commodity."

The above description only provides an explanation of the preferred embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the disclosure. Technical schemes formed by the above-described features being interchanged with, but not limited to, technical features with similar functions disclosed in the present disclosure are examples.

## Claims

1. A method for assigning an order, the method comprising:
receiving an order comprising at least one to-be-picked commodity;
determining, for each workstation in at least one workstation, an outbound turnover box assigned to the workstation, wherein the outbound turnover box is being in an outbound shipping;
detecting, based on articles in the outbound turnover box, whether a first article matching the order is present in the outbound turnover box;
in response to detecting that the first article matching the order is present in the outbound turnover box, detecting whether the first article is all of to-be-picked commodities in the order; and
in response to detecting that the first article is all of the to-be-picked commodities in the order, binding the order to the outbound turnover box corresponding to the first article, and assigning the order to the workstation.

2. The method according to claim 1, wherein the method further comprises:
in response to detecting that the first article is part of the to-be-picked commodities in the order or in response to not detecting the first article, determining a returning turnover box assigned to the workstation, wherein the returning turnover box is being in a warehouse return shipping;
detecting, based on articles in the returning turnover box, whether a second article matching the order is present in the returning turnover box;
in response to detecting that the second article matching the order is present in the returning turnover box, detecting whether a sum of the first article and the second article is all of the to-be-picked commodities in the order; and
in response to detecting that the sum of the first article and the second article is all of the to-be-picked commodities in the order, binding the order to the returning turnover box corresponding to the second article.

3. The method according to claim 2, wherein the method further comprises:
in response to detecting that the sum of the first article and the second article is part of the to-be-picked commodities in the order, selecting, based on a distance between an aisle and the at least one workstation and a task volume of the aisle, in the aisle a first in-warehouse turnover box corresponding to the order, and binding the first in-warehouse turnover box to the order.

4. The method according to claim 2 or 3, wherein the method further comprises:
in response to not detecting the first article and the second article, scoring a commodity corresponding to the order in the at least one workstation to obtain an order score corresponding to the at least one workstation;
determining, based on the order score, a first workstation satisfying the order in the at least one workstation;
assigning the order to the first workstation; and
selecting, based on a distance between an aisle and the first workstation and a task volume of the aisle, in the aisle a second in-warehouse turnover box corresponding to the order, and binding the second in-warehouse turnover box to the order.

5. The method according to claim 4, wherein the scoring a commodity corresponding to the order in the at least one workstation to obtain an order score corresponding to the at least one workstation, comprises:
scoring a number of types of same articles in the at least one workstation as the to-be-picked commodities in the order, to obtain a type score;
scoring a distance of same articles in the at least one workstation as the to-be-picked commodities in the order, to obtain a distance score; and
obtaining the order score based on the type score and the distance score.

6. The method according to claim 5, wherein the scoring a number of types of same articles in the at least one workstation as the to-be-picked commodities in the order, to obtain a type score, comprises:
calculating a ratio of a number of types of articles, same as the to-be-picked commodities in the order, in the turnover box and the in-warehouse turnover box bound to each workstation in the at least one workstation, same as the to-be-picked commodities in the order, to the number of types of the to-be-picked commodities in the order, to obtain an order sub-score;
calculating a ratio of a number of types of articles, same as the to-be-picked commodities in the order, in an aisle where the in-warehouse turnover box bound to each workstation in the at least one workstation is located to the number of types of the to-be-picked commodities in the order, to obtain an aisle sub-score; and
obtaining the type score based on the order sub-score and the aisle sub-score.

7. The method according to claim 4, wherein the assigning the order to the first workstation, comprises:
in response to a historical pooled order being of a same type as the order and orders in the historical pooled order not reaching a preset number of orders, adding the order to the historical pooled order; and
in response to the historical pooled order not being of a same type as the order, determining a type of the order, and assigning a corresponding slot in the first workstation for the type of the order, recording a volume of the slot and an upper limit of the slot on the number of orders.

8. An apparatus for assigning an order, the apparatus comprising:
a receiving unit, configured to receive an order comprising at least one to-be-picked commodity;
a determination unit, configured to determine, for each workstation in at least one workstation, an outbound turnover box assigned to the workstation, wherein the outbound turnover box is being in an outbound shipping;
an article detection unit, configured to detect, based on articles in the outbound turnover box, whether a first article matching the order is present in the outbound turnover box;
a commodity detection unit, configured to detect, in response to detecting that the first article matching the order is present in the outbound turnover box, whether the first article is all of to-be-picked commodities in the order; and
an assignment unit, configured to bind, in response to detecting that the first article is all of the to-be-picked commodities in the order, the order to the outbound turnover box corresponding to the first article, and assign the order to the workstation.

9. The apparatus according to claim 8, wherein the apparatus further comprises: a warehouse return detection unit, and the warehouse return detection unit is configured to:
in response to detecting that the first article is part of the to-be-picked commodities in the order or in response to not detecting the first article, determine a returning turnover box assigned to the workstation, wherein the returning turnover box is being in a warehouse return shipping;
detect, based on articles in the returning turnover box, whether a second article matching the order is present in the returning turnover box;
in response to detecting that the second article matching the order is present in the returning turnover box, detect whether a sum of the first article and the second article is all of the to-be-picked commodities in the order; and
in response to detecting that the sum of the first article and the second article is all of the to-be-picked commodities in the order, bind the order to the returning turnover box corresponding to the second article.

10. An electronic device, comprising:
one or more processors; and
a storage apparatus, storing one or more programs thereon;
the one or more programs, when executed by the one or more processors, cause the one or more processors to implement the method according to any one of claims 1-7.

11. A computer readable medium, storing a computer program thereon, wherein, the program, when executed by a processor, implements the method according to any one of claims 1-7.
